# EUROPÄISCHE PATENTSCHRIFT

(11) **EP 3 383 789 B1**
(45) Veröffentlichungstag und Bekanntmachung des Hinweises auf die Patenterteilung: **11.02.2026**
(21) Anmeldenummer: 16729566.6
(22) Anmeldetag: 15.06.2016
(51) Int. Cl.: B66D 1/74, H02P 7/00, E04G 3/32, B66D 1/48

(54) **SEILDURCHLAUFWINDE**
CONTINUOUS CABLE WINCH
TREUIL À CABLE PASSANT

(30) Priorität: 04.12.2015 DE 202015106629 U
(43) Veröffentlichungstag der Anmeldung: 10.10.2018
(73) Patentinhaber: DualLift GmbH, 27711 Osterholz-Scharmbeck (DE)
(72) Erfinder: LÜLFING, Frank, 29323 Wietze (DE)
(74) Vertreter: Eisenführ Speiser
(86) Internationale Anmeldenummer: PCT/EP2016/063747
(87) Internationale Veröffentlichungsnummer: WO 2017/092882

(56) Entgegenhaltungen:
- EP-A1- 0 347 408
- EP-A2- 0 710 619
- WO-A1-2007/061419
- WO-A1-2015/163137
- DE-U1- 202011 106 995
- US-A1- 2003 098 668
- US-A1- 2003 205 703
- US-A1- 2015 090 946

## Beschreibung

Die vorliegende Erfindung betrifft eine Seildurchlaufwinde mit einer Antriebseinheit und einer Abtriebseinheit zum Beaufschlagen eines Seils mit einer Antriebskraft, welche mit der Antriebseinheit gekoppelt ist.

Winden im Allgemeinen sind seit langer Zeit bekannt und werden zum Anheben von Lasten und Personen, insbesondere zum Überbrücken von Höhenunterschieden, in allen Bereichen der Industrie eingesetzt. Eine bestimmte Art von Winde ist die sogenannte Seildurchlaufwinde, bei der das Seil durch die Winde durchgeführt wird, anstatt es auf der Winde aufzurollen, beispielsweise in einer Trommel. Das Seil kann beispielsweise auf einer oder beiden Seiten der Seildurchlaufwinde schwerkraftbedingt oder aufgrund einer angreifenden Last herabhängen, so dass die Seildurchlaufwinde denjenigen Teil des Seils, der durch die Seildurchlaufwinde hindurchgeführt wird, nicht zu speichern braucht. Hierdurch können Seildurchlaufwinden grundsätzlich eine unbegrenzte Hub- bzw. Zuglänge aufweisen. Solche Seildurchlaufwinden kommen insbesondere dann zum Einsatz, wenn in einem Hubschacht oder an einem Gebäude eine Infrastruktur zum Befestigen externer Winden vorgehalten ist und/oder vorgehalten werden kann.

Seildurchlaufwinden werden üblicherweise für den Personen- und den Materialtransport eingesetzt, beispielsweise bei Fensterreinigungsgondeln.

Als Antrieb werden bei Seildurchlaufwinden beispielsweise Wechselstrommotoren eingesetzt, die über einen Steckverbinder mit einem Versorgungsnetz verbunden werden können.

Diese Aufbauten von Seildurchlaufwinden haben üblicherweise den Nachteil, dass Spannungseinbrüche im Versorgungsnetz direkt auf die Antriebseinheit wirken und die Seildurchlaufwinde demnach in einen instabilen Arbeitspunkt fallen kann. Dieses Betriebsverhalten führt insbesondere dazu, dass Seildurchlaufwinden in Ländern mit schlechter Stromversorgung nur bedingt einsetzbar sind.

US 2015/090946 A1 offenbart einen Kettenzug mit einer Drehzahlregelung. Der Kettenzug umfasst eine Benutzersteuerung, mit der die Geschwindigkeit des Kettenzuges verändert werden kann und welche in einer Handsteuerung integriert ist. Die Handsteuerung umfasst ein Potentiometer, mittels dem eine Ausgangs-spannung für einen Frequenzumrichter einstellbar ist.

US 2003/0098668 A1 betrifft einen Antrieb mit variabler Geschwindigkeit, der einen Umrichter aufweist, mittels dem ein von einer Energiequelle gelieferter Wechselstrom in eine Gleichspannung und vor Abgabe an den Motor wieder in eine Wechselspannung gewandelt wird.

EP 0 347 408 A1 beschreibt einen Antrieb für ein Hubwerk mit einem im Netz gespeisten Drehstrommotor. Dem Drehstrommotor ist ein Frequenzumrichter zugeordnet. Um die Drehzahl des Motors und damit das Überdrehen des Motors beim Absenken einer Last zu begrenzen, werden die Motorstromaufnahme und die Frequenz überwacht.

Eine Seildurchlaufwinde gemäß dem Oberbegriff des Anspruchs 1 ist aus der DE 20 2011 106 995 U1 bekannt.

Vor diesem Hintergrund lag der vorliegenden Erfindung die Aufgabe zugrunde, eine Seildurchlaufwinde zu schaffen, welche die vorstehend beschriebenen Nachteile möglichst abmildert, und insbesondere eine Seildurchlaufwinde für Länder mit schlechter Stromversorgung zu ermöglichen.

Die Erfindung löst die ihr zugrunde liegende Aufgabe bei einer Seildurchlaufwinde der eingangs bezeichneten Art mit den Merkmalen gemäß Anspruch 1.

Demnach wird eine Seildurchlaufwinde mit einer Antriebseinheit und einer Abtriebseinheit zum Beaufschlagen eines Seils mit einer Antriebskraft, welche mit der Antriebseinheit gekoppelt ist vorgeschlagen, wobei die Antriebseinheit: einen Frequenzumrichter mit einer Primärseite zur Stromaufnahme aus einem Versorgungsnetz und einer Sekundärseite zur Abgabe einer Wechselspannung, einen Wechselstrommotor zum Antreiben der Seildurchlaufwinde mit variabler Drehzahl, der durch den Frequenzumrichter mit der Wechselspannung versorgt wird und eine Steuereinheit, die zum Steuern der Antriebseinheit mit dem Frequenzumrichter und dem Wechselstrommotor verschaltet ist, aufweist, wobei die Steuereinheit über einen Hinleiter und einen Rückleiter mit dem Wechselstrommotor verbunden ist und dazu eingerichtet ist, die Drehzahl des Wechselstrommotors mittels des Frequenzumrichters zu ändern. Insbesondere ist erfindungsgemäß vorgeschlagen, dass die Seildurchlaufwinde eine Steuereinheit und einen Frequenzumrichter aufweist, die dazu eingerichtet sind, die Drehzahl des Wechselstrommotors mittels des Frequenzumrichters zu ändern.

Die Erfindung macht sich hierbei die Erkenntnis zu Nutze, dass Hebezeuge und Zugmittel im Betrieb eine im Wesentlichen konstante Last aufweisen und demnach die Antriebsleistung im Wesentlichen eine Funktion der Drehzahl ist. Die Erfindung macht sich insbesondere zu Nutze, dass bei Hebezeugen einzig die zu hebende Last die aufzubringende Hubkraft bestimmt und demnach bei Einbruch der Versorgungsspannung, also bei Einbruch der Netzspannung, die Geschwindigkeit, also die Drehgeschwindigkeit bzw. Drehzahl des Wechselstrommotors, herabgesetzt wird, um den Effekt des Spannungseinbruches entgegenzuwirken.

Vorzugsweise weist die Steuereinheit Mittel zur Spannungserfassung auf und ist dazu eingerichtet, bei Erfassen einer Unterspannung die Drehzahl des Wechselstrommotors zu ändern, insbesondere zu verringern. Die Steuereinheit weist also wenigstens eine Vorrichtung zum Erfassen einer Spannung auf, insbesondere einen Spannungsmesser, der dazu ausgebildet ist, Spannungen, bevorzugt auf der Primärseite des Frequenzumrichters, zu erfassen und diese an die Steuereinheit weiterzugeben. Die Steuereinheit selbst ist ferner dazu eingerichtet, die so erfassten Spannungen mit vorprogrammierten Spannungsgrenzwerten abzugleichen und im Falle einer Unterschreitung eines unteren Grenzwertes, einer sogenannten Unterspannung, die Drehzahl des Wechselstrommotors so anzupassen, dass die mechanische Leistung des Wechselstrommotors der vom Versorgungsnetz zur Verfügung gestellten elektrischen Leistung entspricht. Die Steuereinheit ist also dazu vorbereitet, den Wechselstrommotor zu drosseln, insbesondere die Drehzahl des Wechselstrommotors zu verringern.

Gemäß einer bevorzugten Ausführungsform der Erfindung weist die Steuereinheit der Seildurchlaufwinde Mittel zur Stromerfassung auf, wobei die Steuereinheit dazu eingerichtet ist, bei Erfassen eines Überstroms die Drehzahl des Wechselstrommotors zu ändern, insbesondere zu verringern. Bevorzugt sind die Mittel zur Stromerfassung als Überstromschutz ausgebildet, die dazu eingerichtet sind, auf der Sekundärseite des Frequenzumrichters einen Nennstrom zu erfassen und den so erfassten Nennstrom an die Steuereinheit zu übergeben. Die Steuereinheit weist ferner vorprogrammierte Stromgrenzwerte auf und ist dazu eingerichtet, die so erfassten Ströme mit den vorprogrammierten Stromgrenzwerten abzugleichen und im Falle eines Überschreiten eines oberen Grenzwertes, einen sogenannten Überstrom, die Drehzahl des Wechselstrommotors so anzupassen, dass die mechanische Leistung des Wechselstrommotors der vom Versorgungsnetz zur Verfügung gestellten elektrischen Leistung entspricht bzw. den Wechselstrommotor einem kritischen Betriebsstrom zu schützen.

Die Erfassung der Ströme und Spannungen kann sowohl ein- als auch mehrphasig erfolgen.

Optional ist die Steuereinheit der Seildurchlaufwinde dazu eingerichtet, die Drehzahl des Wechselstrommotors stufenweise zu ändern, vorzugsweise zwischen vier, besonders bevorzugt zwischen zwei Stufen. Die Steuereinheit weist hierzu beispielsweise eine Schalteinrichtung auf, die dazu eingerichtet ist, die Erregerspannung des Wechselstrommotors stufenweise zu verändern, insbesondere so, dass der Wechselstrommotor auch seinen Drehsinn ändern kann. Bevorzugt ist der Wechselstrommotor wenigstens in einer ersten und eine zweiten Geschwindigkeit in einer Vorwärts-Drehrichtung, sowie mindestens einer ersten Rückwärts-Drehrichtung betreibbar. Die Stufen sind also vorzugsweise abhängig von Drehrichtung und Geschwindigkeit wählbar.

Gemäß einer weiteren bevorzugten Ausführungsform der Erfindung weist die Steuereinheit eine Steuerdatenbank auf, wobei die Steuerdatenbank dazu eingerichtet ist, vorprogrammierte Steuerwerte an die Steuereinheit bereitzustellen, insbesondere in Abhängigkeit von erfassten Spannungen. Die Steuerdatenbank der Steuereinheit ist vorzugsweise dazu eingerichtet, dass Steuerwerte entsprechend des Einsatzortes beziehungsweise des entsprechenden Versorgungsnetzes so hinterlegt werden, dass die Seildurchlaufwinde an unterschiedlichsten Versorgungsnetzen arbeiten kann. Eine solche Ausführungsform ist besonders vorteilhaft im Bereich der Massenproduktion einsetzbar, da die Seildurchlaufwinden unabhängig ihres Einsatzortes hergestellt und vor Ort entsprechend des Einsatzortes programmiert werden können.

Weiter vorzugsweise ist die Steuereinheit der Seildurchlaufwinde dazu eingerichtet, bei Erfassen einer Unterspannung durch die Mittel zur Spannungserfassung und/oder eines Überstroms durch die Mittel zur Stromerfassung die Drehzahl des Wechselstrommotors in Abhängigkeit der erfassten Unterspannung und/oder des erfassten Überstroms so zu ändern, dass der elektrische Leistungsbedarf des Wechselstrommotors um das selbe Maß sinkt wie die vom Versorgungsnetz bereitgestellte Wechselspannung am Frequenzumrichter. Hierzu gleicht die Steuereinheit beispielsweise den erfassten Strom bzw. die erfasste Spannung mit vorprogrammierten Soll-Werten ab und im Falle einer Abweichung wird der Motor in eine entsprechende Stufe so umgeschaltet, dass elektrisches und mechanisches Moment im Wesentlich gleich groß sind. Dies verhindert insbesondere ein Durchgehen der Seildurchlaufwind und/oder Überströme im Wechselstrommotor.

Gemäß einer weiteren bevorzugten Ausführungsform der Erfindung ist die Steuereinheit der Seildurchlaufwinde dazu eingerichtet, den elektrischen Leistungsbedarf des Wechselstrommotors zu halbieren und zu verdoppeln. Bevorzugt erfolgt die Ansteuerung des Wechselstrommotors also in Stufen, die Vielfache voneinander sind. Besonders vorteilhaft hierbei ist, dass dies auf einfache Art und Weise beispielsweise durch Widerstandsbrückenschaltungen oder einfache Schaltvorgänge realisiert werden kann, so dass eine zu komplexe Ansteuerung vermieden wird, wie es beispielsweise bei einer kontinuierlichen Ansteuerung eines Wechselstrommotors der Fall wäre.

Gemäß einer weiteren bevorzugten Ausführungsform der Erfindung ist der Frequenzumrichter der Seildurchlaufwinde dazu eingerichtet, an einem Versorgungsnetz mit einer Anzahl von Phasen, vorzugsweise im Bereich von einer Phase bis drei Phasen, betrieben zu werden. Hierzu ist der Wechselstrommotor beispielsweise als 1-Phasen bzw. 3-Phasen-Motor ausgebildet, so dass er sowohl an einem einphasigen als auch einem dreiphasigen Versorgungsnetz betrieben werden kann.

Gemäß einer besonders bevorzugten Ausführungsform sind der Frequenzumrichter und die Steuereinheit der Seildurchlaufwinde als eine integrierte Vorrichtung ausgebildet. Besonders vorteilhaft bei einer integrierten, insbesondere einteiligen Ausführung ist der sich ergebende modulare Aufbau, der eine einfache Nachrüstbarkeit bestehender Wechselstrommotoren von Seildurchlaufwinden bietet.

Gemäß einer besonders bevorzugten Ausführungsform der Erfindung weist das Versorgungsnetz an das die Seildurchlaufwinde angeschlossen ist eine Nennspannung von mindestens 50V, vorzugweise mindestens 100V, weiter vorzugsweise mindestens 200V, besonders bevorzugt mindestens 230V, auf. Die Seildurchlaufwinde ist demnach dazu eingerichtet auch an einem Versorgungsnetz mit niedriger Spannung, wie beispielsweise 50V, betrieben zu werden. Bevorzugt wird die Seildurchlaufwinde an Versorgungsnetzen mit einer Nennspannung von 200 V bis 400 betrieben.

Gemäß einer weiteren bevorzugten Ausführungsform der Erfindung ist der Wechselstrommotor der Seildurchlaufwinde zum Betrieb mit einer einphasigen Nenn-Wechselspannung von 230 V eingerichtet. Der Wechselstrommotor ist demnach als 1-Phasen 230 V Wechselstrommotor ausgebildet. Besonders vorteilhaft hierbei sind die hohe Ersatzteildichte und die einfache Wartung solcher Wechselstrommotoren. Dies ist insbesondere von Bedeutung in Ländern mit schlechter Infrastruktur, die üblicherweise auch ein im Wesentlichen instabiles Versorgungsnetz bereitstellen.

Gemäß einer weiteren bevorzugten Ausführungsform der Erfindung ist der Frequenzumrichter der Seildurchlaufwinde zum Betrieb an einem dreiphasigen Versorgungsnetz mit mindestens 400 V eingerichtet ist. Die Seildurchlaufwinde ist also dazu eingerichtet auch im europäischen Raum eingesetzt zu werden.

Gemäß einer weiteren bevorzugten Ausführungsform der Erfindung beträgt die Steuerspannung des Gleichrichters 24V, vorzugsweise 230 V. Die Schaltung der Seildurchlaufwinde erfolgt demnach mit einer Steuerspannung von 24 V oder 230 V. Aber auch andere Steuerpotentiale wären denkbar.

Gemäß einer weiteren bevorzugten Ausführungsform der Erfindung weist die Seildurchlaufwinde einen Adapter mit einer netzseitigen Primärseite und einer Sekundärseite zum Verbinden mit der Seildurchlaufwinde auf, wobei der Adapter dazu eingerichtet ist, mindestens eine einphasige Nenn-Wechselspannung von 230 V auf der Sekundärseite bereitzustellen. Für den Anschluss der Seildurchlaufwinde an das Versorgungsnetz beispielsweise ein Adapter verwendet werden, der dazu eingerichtet ist die Seildurchlaufwinde elektrisch mit einem Versorgungsnetz elektrisch zu koppeln. Bevorzugt stelle der Adapter dem Frequenzumrichter eine einphasige-Wechselspannung von 230 V. Besonders vorteilhaft hierbei ist, dass die Seildurchlaufwinde unter geringem Kostenaufwand dazu eingerichtet werden kann, an Versorgungsnetzen zu arbeiten, deren Spannungshöhen, Stechverbinder oder Netzaufbauten nicht zum Anschluss der Seildurchlaufwinde kompatibel sind. Einige Beispiele für solche Adapter werden nachfolgend noch erläutert.

Die Erfindung wird im Folgenden anhand bevorzugter Ausführungsbeispiele und unter Bezugnahme auf die beigefügten Figuren näher beschrieben. Hierbei zeigen:
- Fig.1: eine schematische Seitenansicht einer Seildurchlaufwinde gemäß einem Ausführungsform
- Fig. 2: eine schematische Verschaltung einer Seildurchlaufwinde gemäß einer Ausführungsform
- Fig. 3: eine schematische Darstellung einer Steuerung einer Seildurchlaufwinde gemäß einer Ausführungsform
- Fig. 4a: eine schematische Darstellung von Adaptern einer Seildurchlaufwinde gemäß einer Ausführungsform
- Fig. 4b: eine schematische Darstellung einer weiteren Ausführungsform einer Primärseite eines Adapters gemäß Fig. 4a
- Fig. 4c: eine schematische Darstellung einer weiter bevorzugten Ausführungsform einer Primärseite eines Adapters gemäß Fig. 4a

Für gleiche oder ähnliche Elemente werden in Bezug auf die Ausführungsbeispiele gleiche Bezugszeichen vergeben. Insoweit wird bei fehlender expliziter Nennung zu einer Figur jeweils auf die Erläuterungen zu den übrigen Figuren bezuggenommen.

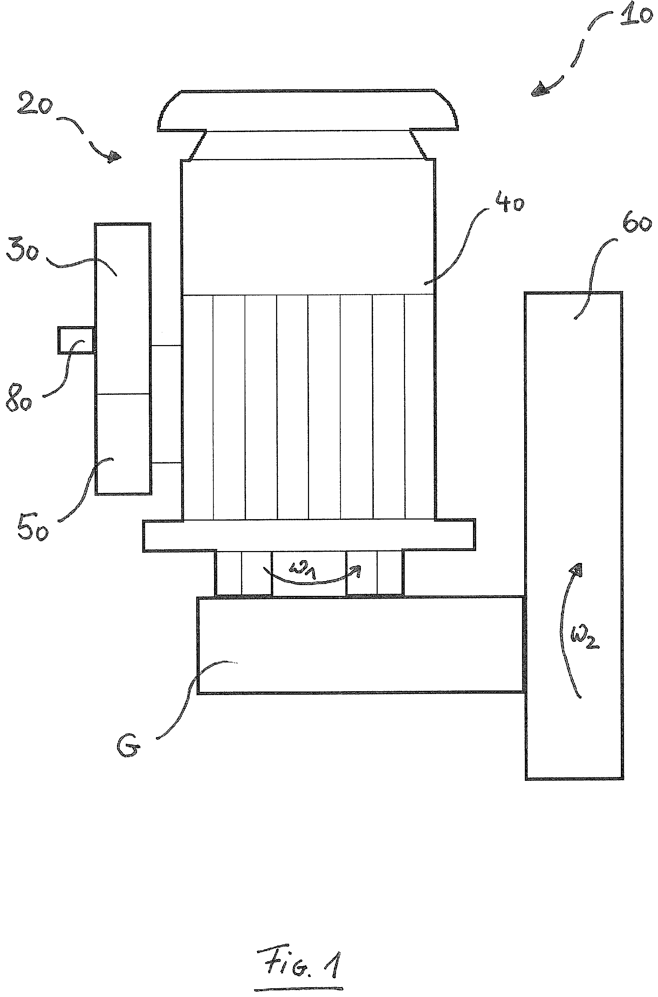

Die Fig. 1 zeigt eine Seildurchlaufwinde mit einer Antriebseinheit 10, wobei die Antriebseinheit 20 einen Frequenzumrichter 30 mit einer Primärseite zur Stromaufnahme aus einem Versorgungsnetz und einer Sekundärseite zur Abgabe einer Wechselspannung, einen Wechselstrommotor 40 zum Antreiben der Seildurchlaufwinde 10 mit variabler Drehzahl ω₁, der durch den Frequenzumrichter 30 mit der Wechselspannung versorgt wird, eine Steuereinheit 50, die zum Steuern der Antriebseinheit 20 mit dem Frequenzumrichter 30 und dem Wechselstrommotor 40 verschaltet ist und eine Abtriebseinheit 60 mit einer zweiten Drehzahl ω₂ zum Beaufschlagen eines Seils (nicht dargestellt) mit einer Antriebskraft, welche mit der Antriebseinheit 20 gekoppelt ist.

Die Abtriebseinheit 60 mit einer variablen Drehzahl ω₂ ist über eine Verbindungseinrichtung G mit der Antriebseinheit 20 gekoppelt, beispielsweise über ein Getriebe, sodass diese Drehzahlen ein Übersetzungsverhältnis aufweisen. In einer weiteren Ausführungsform sind die Abtriebseinheit 60 und die Antriebseinheit 20 über einen gemeinsamen Flansch verbunden oder weisen eine gemeinsame Welle auf. In diesen Fällen ist das Übersetzungsverhältnis im Wesentlichen 1 und die Drehlzahl ω₁ der Antriebseinheit 20 entspricht der Drehzahl ω₂ der Abtriebseinheit 60.

Zur Stromversorgung der Seildurchlaufwinde ist die Antriebseinheit 20 über eine Anschlusseinrichtung 80, die beispielsweise als Adapter 80 ausgebildet ist, mit dem elektrisches Versorgungsnetz so gekoppelt, dass die Seildurchlaufwinde 10 betriebsfähig bestromt wird. Der Frequenzumrichter 30 und die Steuereinheit 50 sind hierbei zweiteilig ausgebildet.

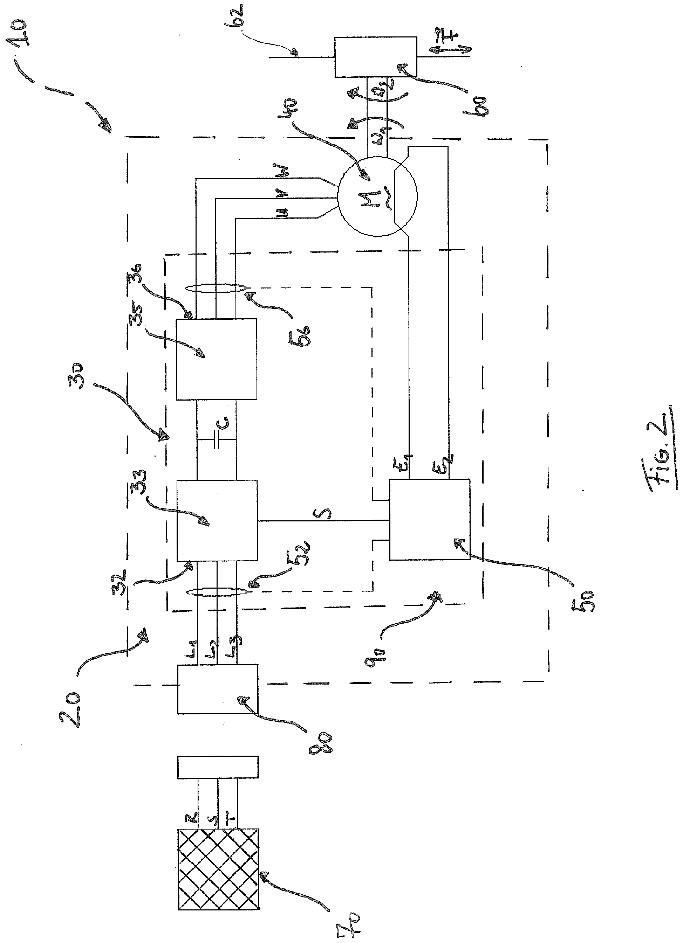

Die Fig. 2 zeigt eine Verschaltung einer Seildurchlaufwinde 10 gemäß einer Ausführungsform. Die Antriebseinheit 20 weist einen Frequenzumrichter 30 mit einem Gleichspannungszwischenkreis C auf, wobei die Primärseite des Frequenzumrichters 32 zur Stromaufnahme die drei Phasen L1, L2, L3 aufweist, die mit den drei Phasen R, S, T des Versorgungsnetzes 70 entsprechend phasenrichtig so verbunden sind, dass dem Frequenzumrichter 30 an der Primärseite 32 die Nennspannung des elektrischen Versorgungsnetzes 70, bevorzugt 230V, bereitgestellt wird. Der Frequenzumrichter 30 ist also zum Betrieb an einem üblichen dreiphasigen Versorgungsnetz 70 eingerichtet. Die Primärseite 32 bzw. der Frequenzumrichter 30 ist ferner dazu eingerichtet, mit wenigstens 400 V Eingangsspannung betrieben zu werden.

Der Frequenzumrichter 30 weist primärseitig eine Gleichrichtvorrichtung 33 und sekundärseitig eine Wechselrichtvorrichtung 35 auf, wobei diese über einen Gleichspannungszwischenkreis miteinander so gekoppelt sind, dass der Frequenzumrichter an seiner Sekundärseite 36 eine bevorzugte dreiphasige Wechselspannung U_{U}, U_{V}, U_{W} die über die Phasen U, V, W dem Wechselstrommotor 40 so bereitgestellt werden, dass dieser die Abtriebseinheit 60 antreiben kann, um ein durch die Seildurchlaufwinde 10 durchlaufendes Seil 62 mit der Antriebskraft F zu beaufschlagen.

Ferner weist die Antriebseinheit 20 der Seildurchlaufwinde 10 eine Steuereinheit 50 auf, die über Leitungen S, E1, E2 mit dem Frequenzumrichter 30 und dem Wechselstrommotor 40 verbunden ist, wobei über eine Leitung S Steuersignale an den Frequenzumrichter 30 geben werden und über eine Leitung, die aus einem Hinleiter E1 und einem Rückleiter E2 ausgebildet ist, der Wechselstrommotor 40 erregt wird.

Der Frequenzumrichter 30 und die Steuereinheit sind in einer besonders bevorzugten Ausführungsform im Wesentlich einteilig, also als eine Vorrichtung 90 ausgebildet, die über einen Adapter 80 an das elektrische Versorgungsnetz 70 angeschlossen wird. Der Adapter 80 weist hierzu eine netzseitige Primärseite und eine Sekundärseite zum Verbinden mit der Seildurchlaufwinde 10 auf, insbesondere zum Verbinden mit dem Frequenzumrichter 30 und/oder der Steuereinheit 50. Der Adapter ist ferner dazu eingerichtet, mindestens eine einphasige Nenn-Wechselspannung von 230 V auf der Sekundärseite bereitzustellen und das Versorgungsnetz 70 weist eine Nennspannung von mindestens 50V, vorzugweise mindestens 100V, weiter vorzugsweise mindestens 200V, besonders bevorzugt mindestens 230V, auf.

Die Steuereinheit 50 weist zudem wenigstens eine Spannungserfassung 52 auf und ist dazu eingerichtet, bei Erfassen einer Unterspannung die Drehzahl des Wechselstrommotors ω₁ zu ändern, insbesondere zu verringern. Gemäß einer Ausführungsform sind die Mittel zur Spannungserfassung 52 auf der Primärseite 32 des Frequenzumrichters 30 so angeordnet, dass die Spannungserfassung 52 einen Spannungseinbruch der Netzspannung des Versorgungsnetzes 33 detektieren kann. Die Steuereinheit 50 auch noch eine weitere Spannungserfassungen 52 aufweisen, die auf der Sekundärseite 36 des Frequenzumrichters 30 die Motorspannung Uu, Uv, Uw erfasst.

Ferner weist die Steuereinheit wenigstens eine Stromerfassung 56 auf und ist dazu eingerichtet, bei Erfassen eines Überstromes die Drehzahl des Wechselstrommotors ω₁ zu ändern, insbesondere zu verringern. Gemäß einer Ausführungsform sind die Mittel zur Stromerfassung 56 auf der Sekundärseite 36 des Frequenzumrichters so angeordnet, dass die Stromerfassung 56 einen zu hohen Strom im Wechselspannungsmotor detektieren kann. Die Steuereinheit kann auch noch weitere Stromerfassungen 56 aufweisen, die auf der Primärseite 32 des Frequenzumrichters 30 den Versorgungsnetzstrom der in den Frequenzumrichter 30 fließt erfasst.

Die Steuereinheit 50 ist dazu eingerichtet, die Drehzahl des Wechselstrommotors ω₁ stufenweise so zu schalten, dass die durch die Mittel 62, 66 erfassten Unterspannung und/oder Überströme in der Leistungsabgabe der Antriebseinheit 20 berücksichtigt werden, insbesondere so, dass bei einem Spannungseinbruch die Drehzahl der Antriebseinheit ω₁ und demnach die Drehzahl der Abtriebseinheit ω₂ so herabgesetzt wird, dass das durch die Seildurchlaufwinde laufende Seil 62 eine geringere Geschwindigkeit, insbesondere halbe Nenn-Geschwindigkeit aufweist. In einer besonders bevorzugten Ausführungsform weist das Seil 62 eine Nenn-Geschwindigkeit von 18 Metern pro Minute auf, und die Steuereinheit ist dazu eingerichtet, die Geschwindigkeit auf 9 Meter pro Minute zu halbieren.

Die Steuereinheit 50 ist also dazu eingerichtet, die Drehzahl des Wechselstrommotors ω₁ in Abhängigkeit der erfassten Unterspannung und/oder des erfassten Überstromes so zu ändern, dass der elektrische Leistungsbedarf des Wechselstrommotors 40 um dasselbe Maß sinkt wie die vom Versorgungsnetz 33 bereitgestellte Wechselspannung U_{R}, U_{S}, U_{T} am Frequenzumrichter 30.

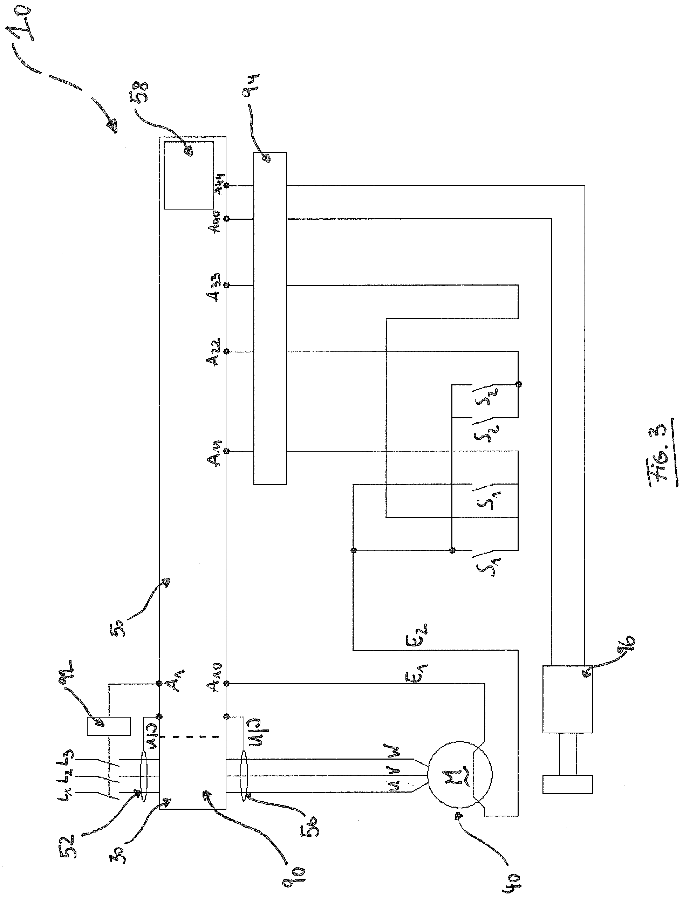

Die Fig. 3 zeigt eine bevorzugte Steuerung einer Seildurchlaufwinde 10 gemäß einer Ausführungsform, wobei der Frequenzumrichter 30 und die Steuereinheit 50 in einer Vorrichtung 90 mit drei Phasen L1, L2, L3 zur Stromaufnahme ausgebildet sind. Die drei Phasen L1, L2, L3 können gemäß Fig. 2 an ein Versorgungsnetz (nicht dargestellt) angeschlossen werden. Um Beschädigung von der Seildurchlaufwinde 10 abzuwenden, beispielsweise bei Überströmen, weist die Seildurchlaufwinde einen Notschalter 92 auf, der dazu eingerichtet ist, die Seildurchlaufwinde 10 vom Versorgungsnetz zu trennen. In einer bevorzugten Ausführungsform erfolgt dies mittels der Steuereinheit 50, die einen Steuerausgang A1 aufweist, der dazu eingerichtet ist den Notschalter so anzusteuern, dass die Seildurchlaufwinde vom Versorgungsnetz getrennt wird. Die Seildurchlaufwinde kann ferner auch einen Taster (nicht dargestellt) hierfür aufweisen, der durch ServicePersonal im Falle eines Fehlers manuell betätigt werden kann, um Schaden von der Seildurchlaufwinde 10 zu wenden.

Der Frequenzumrichter 30 weist drei Phasen U, V, W auf, mittels derer der Wechselstrommotor 40 der Seildurchlaufwinde bestromt wird. Der Frequenzumrichter 30 ist ferner dazu eingerichtet, an einem Versorgungsnetz mit wenigstens einer Phase betrieben zu werden. Bevorzugt ist der Frequenzumrichter dazu eingerichtet, an einem Versorgungsnetz mit drei Phasen betrieben zu werden.

Ferner weist die Steuereinheit 50 zwei Steuerausgänge A10, A11 die mit dem Hinleiter E1 und dem Rückleiter E2 so verbunden sind, dass der Wechselstrommotor 40 mit einer ersten Erregerspannung so erregt wird, dass der Wechselstrommotor 40 die Drehzahl einer ersten Stufe S1 aufweist, wodurch die Seildurchlaufwinde 10 eine erste Geschwindigkeit aufweist, beispielsweise 18 Meter pro Minute. Die erste Stufe S1 wird mittels eines ersten Schalters S1 durch die Steuerungseinheit 50 angewählt.

Zudem weist die Steuereinheit 50 einen Steuerausgang A22 auf. Im Falle einer detektierten Unterspannung und/oder eines Überstromes schaltet die Steuereinheit die Steuereingänge A11, A22 so, dass der Wechselstrommotor 40 mit einer zweiten Erregerspannung so erregt wird, dass der Wechselstrommotor 40 die Drehzahl einer zweiten Stufe S2 aufweist, wodurch die Seildurchlaufwinde eine zweite Geschwindigkeit aufweist, beispielsweise 9 Meter pro Minute. Die zweite Stufe S2 wird mittels eines zweiten Schalter S2 durch die Steuerungseinheit 50 ausgewählt. Je nach Art der Steuerung ergeben sich für die Schaltlogik unterschiedliche Schaltzustände, beispielsweise ist für die erste Stufe S1 der erste Schalter S1 geschlossen und der zweite Schalter S2 offen und für die zweite Stufe der erste Schalter S1 offen und der zweite Schalter S2 geschlossen. Die Steuereinheit 50 ist also dazu eingerichtet, die Drehzahl des Wechselstrommotors stufenweise zwischen zwei Stufen S1, S2 zu ändern. Bevorzug ist die Steuereinheit dazu eingerichtet, die Drehzahl des Wechselspannungsmotors so zu ändern, dass der elektrische Leistungsbedarf des Wechselstrommotors 40 zu halbiert bzw. verdoppelt wird. Optional ist die Steuereinheit 50 dazu eingerichtet, die Drehzahl des Wechselstrommotors ω₁ stufenweise zwischen vier Stufen zu ändern.

Auch weist Steuereinheit 50 eine Steuerdatenbank 58 auf, die dazu eingerichtet ist, vorprogrammierte Steuerwerte an die Steuereinheit 50 bereitzustellen, insbesondere in Abhängigkeit von erfassten Spannungen und Strömen. Die Seildurchlaufwinde ist also dazu eingerichtet, für bestimmte Versorgungsnetze und/oder Aufgaben so programmiert zu werden, dass sie entsprechend dem Einsatzgebiet der Seildurchlaufwinde angepasst werden kann. Die Steuereinheit weist optional eine Steuerspannung von 24V auf. In einer besonders bevorzugten Ausführungsform beträgt die Steuerspannung 230V.

Die Steuereinheit 50 ist also dazu eingerichtet, bei Erfassen einer Unterspannung durch Mittel zur Spannungserfassung und/oder eines Überstromes durch Mittel zur Stromerfassung die Drehzahl des Wechselstrommotors n Abhängigkeit der erfassten Unterspannung und/oder des erfassten Überstromes so zu ändern, dass der elektrische Leistungsbedarf des Wechselstrommotors 40 um dasselbe Maß sinkt wie die vom Versorgungsnetz bereitgestellte Wechselspannung am Frequenzumrichter 30 bzw. der Vorrichtung 90.

Ferner weist die Steuereinheit 50 einen Steuerausgang A33 auf, der dazu eingerichtet ist, die Drehrichtung des Wechselstrommotors 40 umzukehren. Der Steuerausgang A33 weist demnach ein Potential auf, welches den Potentialen der Steuerausgänge A11, A22 so entgegengesetzt ist, dass der Erregerstrom der durch den Wechselstrommotor fließt seine Richtung umkehrt. In einer Ausführungsform weist die Seildurchlaufwinde 10 zwei Vorwärtsgeschwindigkeiten und eine Rückwärtsgeschwindigkeit auf.

Auch weist die Vorrichtung 90 eine Schutzeinrichtung 94 auf, die dazu eingerichtet ist, einen Fehlerhaften Erregerstrom des Wechselstrommotors zu detektieren. Dies kann beispielsweise durch die Mittel zur Stromerfassung der Steuereinheit erfolgen. Im Falle eines fehlerhaften Erregerstroms löst die Schutzeinrichtung aus und unterbricht die Erregung des Wechselstrommotors.

Ferner weist die Vorrichtung 90 eine elektrische Bremse 96 auf, die über die Steuerausgänge A40, A42 angesteuert werden kann, wobei die elektrische Bremse 96 dazu eingerichtet ist, den Wechselstrommotor 40 und demnach die Seildurchlaufwinde 10 zu bremsen.

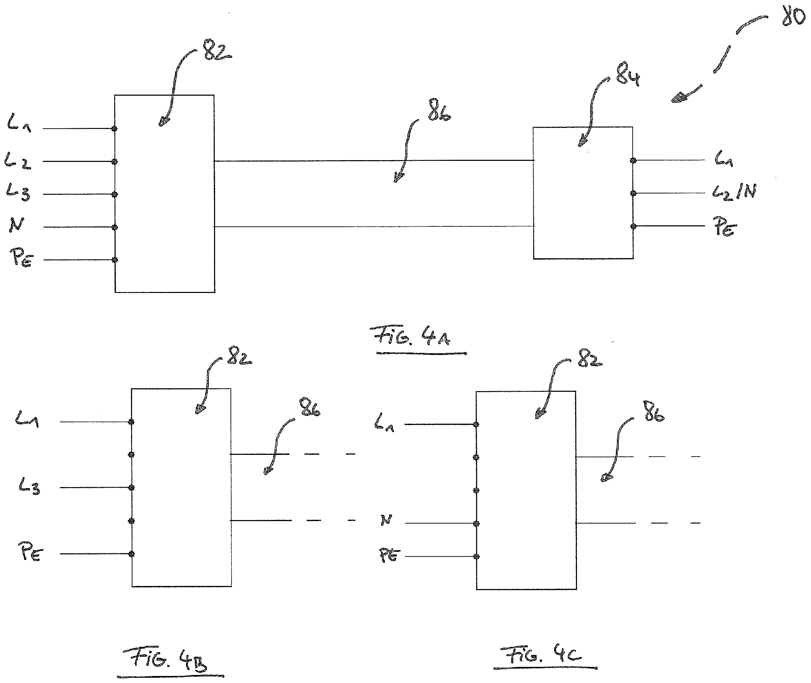

Die Fig. 4a zeigt eine schematische Darstellung eines Adapters 80 einer Seildurchlaufwinde 10 gemäß einer Ausführungsform.

Adapter 80 weist eine netzseitige Primärseite 82 und eine Sekundärseite 84 zum Verbinden mit der Seildurchlaufwinde auf, die über ein Verbindungselement 86 mit einander gekoppelt sind. Die netzseitige Primärseite 82 weist die Anschlüsse L1, L2, L3, N, PE auf, so dass der Adapter 80 dazu eingerichtet ist mit beliebigen Versorgungsnetzten, beispielsweise über Stecker, verbunden zu werden. Die Sekundärseite 84 weist die Anschlüsse L1, L2/N, PE auf, so dass die Sekundärseite dazu eingerichtet ist, mit einem Wechselstrommotor 40 gemäß einer Ausführungsform gekoppelt zu werden. Ferner ist der Adapter dazu eingerichtet ist mindestens eine einphasige Nenn-Wechselspannung von 230 V auf der Sekundärseite bereitzustellen.

Die Fig. 4b zeigt eine schematische Darstellung einer weiteren Ausführungsform einer Primärseite Adapters gemäß Fig. 4a. Die Primärseite 82 weist die Anschlüsse L1, L3, PE auf, so dass der Adapter dazu eingerichtet ist mit einem hierzu äquivalenten Netzanschluss verbunden zu werden.

Die Fig. 4c zeigt eine schematische Darstellung einer weiter bevorzugten Ausführungsform eines Adapters gemäß Fig. 4a. Die Primärseite 82 weist die Anschlüsse L1, N, PE auf, so dass der Adapter dazu eingerichtet ist mit einem hierzu äquivalenten Netzanschluss verbunden zu werden.

## Patentansprüche

1. Seildurchlaufwinde (10) mit einer Antriebseinheit **(20)** und einer Abtriebseinheit (60) zum Beaufschlagen eines Seils mit einer Antriebskraft, welche mit der Antriebseinheit (20) gekoppelt ist, wobei die Antriebseinheit (20) aufweist:
- einen Frequenzumrichter (30) mit einer Primärseite (32) zur Stromaufnahme aus einem Versorgungsnetz (33) und einer Sekundärseite (36) zur Abgabe einer Wechselspannung (Uu, Uv, Uw),
- einen Wechselstrommotor (40) zum Antreiben der Seildurchlaufwinde (10) mit variabler Drehzahl (ω₁), der durch den Frequenzumrichter (30) mit der Wechselspannung (U_{U}, Uv, Uw) versorgt wird, **gekennzeichnet durch**
- **eine** Steuereinheit (50), die zum Steuern der Antriebseinheit (20) mit dem Frequenzumrichter (30) und dem Wechselstrommotor (40) verschaltet ist, wobei die Steuereinheit (50) über einen Hinleiter (E1) und einen Rückleiter (E2) mit dem Wechselstrommotor (40) verbunden ist, wobei
- die Steuereinheit (50) dazu eingerichtet ist, die Drehzahl (ω₁) des Wechselstrommotors (40) mittels des Frequenzumrichters (30) zu ändern.

2. Seildurchlaufwinde nach Anspruch 1, wobei
- die Steuereinheit (50) Mittel zur Spannungserfassung (52) aufweist und dazu eingerichtet ist, bei Erfassen einer Unterspannung die Drehzahl des Wechselstrommotors (ω₁) zu ändern, insbesondere zu verringern.

3. Seildurchlaufwinde nach Anspruch 1 oder 2, wobei
- die Steuereinheit Mittel zur Stromerfassung (56) aufweist und dazu eingerichtet ist, bei Erfassen eines Überstromes die Drehzahl des Wechselstrommotors (ω₁) zu ändern, insbesondere zu verringern.

4. Seildurchlaufwinde nach einem der vorstehenden Ansprüche, wobei
- die Steuereinheit (50) dazu eingerichtet ist, die Drehzahl des Wechselstrommotors (ω₁) stufenweise zu ändern, vorzugsweise zwischen vier Stufen, besonders bevorzugt zwischen zwei Stufen (S₁, S₂).

5. Seildurchlaufwinde nach einem der vorstehenden Ansprüche, wobei
- die Steuereinheit (50) eine Steuerdatenbank aufweist und die Steuerdatenbank dazu eingerichtet ist, vorprogrammierte Steuerwerte an die Steuereinheit (60) bereitzustellen, insbesondere in Abhängigkeit von erfassten Spannungen und Strömen.

6. Seildurchlaufwinde nach einem der vorstehenden Ansprüche, wobei
- die Steuereinheit (50) dazu eingerichtet ist, bei Erfassen einer Unterspannung durch die Mittel zur Spannungserfassung (52) und/oder eines Überstromes durch die Mittel zur Stromerfassung (54) die Drehzahl des Wechselstrommotors (ω₁) in Abhängigkeit der erfassten Unterspannung und/oder des erfassten Überstromes so zu ändern, dass der elektrische Leistungsbedarf des Wechselstrommotors (40) um dasselbe Maß sinkt wie die vom Versorgungsnetz (33) bereitgestellte Wechselspannung (U_{R}, U_{S}, U_{T}) am Frequenzumrichter (30).

7. Seildurchlaufwinde nach einem der vorstehenden Ansprüche, wobei
- die Steuereinheit (50) dazu eingerichtet ist, den elektrischen Leistungsbedarf des Wechselstrommotors (40) zu halbieren und zu verdoppeln.

8. Seildurchlaufwinde nach einem der vorstehenden Ansprüche, wobei
- der Frequenzumrichter (30) dazu eingerichtet ist, an einem Versorgungsnetz (33) mit einer Anzahl von Phasen, vorzugsweise im Bereich von einer Phase bis drei Phasen, betrieben zu werden.

9. Seildurchlaufwinde nach einem der vorstehenden Ansprüche, wobei
- der Frequenzumrichter (30) und die Steuereinheit (50) als eine integrierte Vorrichtung (90) ausgebildet sind.

10. Seildurchlaufwinde nach Anspruch 6, wobei
- das Versorgungsnetz (33) eine Nennspannung von mindestens 50V, vorzugweise mindestens 100V, weiter vorzugsweise mindestens 200V, besonders bevorzugt mindestens 230V, aufweist.

11. Seildurchlaufwinde nach einem der vorstehenden Ansprüche, wobei
- der Wechselstrommotor (40) zum Betrieb mit einer einphasigen Nenn-Wechselspannung von 230 V eingerichtet ist.

12. Seildurchlaufwinde nach einem der vorstehenden Ansprüche, wobei
- der Frequenzumrichter (30) zum Betrieb an einem dreiphasigen Versorgungsnetz (33) mit mindestens 400 V eingerichtet ist.

13. Seildurchlaufwinde nach einem der vorstehenden Ansprüche, wobei
- die Steuerspannung des Gleichrichters 24V, vorzugsweise 230 V, beträgt.

14. Seildurchlaufwinde nach einem der vorstehenden Ansprüche, wobei
- die Seildurchlaufwinde einen Adapter (80) mit einer netzseitigen Primärseite und einer Sekundärseite zum Verbinden mit der Seildurchlaufwinde (10) aufweist, und
- der Adapter dazu eingerichtet ist mindestens eine einphasige Nenn-Wechselspannung von 230 V auf der Sekundärseite bereitzustellen.

## Claims

1. Continuous cable winch (10) with a drive unit (20) and a output unit (60) for applying a drive force to a cable, which output unit is coupled to the drive unit (20), wherein the drive unit (20) comprises:
- a frequency converter (30) with a primary side (32) for receiving current from a power grid (33) and a secondary side (36) for outputting an AC voltage (U_{U} , U_{V} , U_{W} ),
- an AC motor (40) for driving the continuous cable winch (10) at variable rotational speed (ω₁), the motor being supplied with the AC voltage (Uu , Uv , U_{W} ) by the frequency converter (30), **characterized by**
- a control unit (50) connected to the frequency converter (30) and to the AC motor (40) for controlling the drive unit (20), wherein the control unit (50) is connected to the AC motor (40) via a forward conductor (E1) and a return conductor (E2), wherein
- the control unit (50) is configured to change the rotational speed (ω₁ ) of the AC motor (40) by means of the frequency converter (30).

2. Continuous cable winch according to claim 1, wherein
- the control unit (50) comprises voltage detection means (52) and is configured to change, in particular to reduce, the rotational speed (ω₁) of the AC motor when an undervoltage is detected.

3. Continuous cable winch according to claim 1 or 2, wherein
- the control unit comprises current detecting means (56) and is configured to change, in particular to reduce, the rotational speed (ω₁) of the AC motor when an overcurrent is detected.

4. Continuous cable winch according to any one of the preceding claims, wherein
- the control unit (50) is configured to change the speed of the AC motor (ω₁ ) stepwise, preferably in four stages, particularly preferred in two stages (S₁ , S₂ ).

5. Continuous cable winch according to any one of the preceding claims, wherein
- the control unit (50) comprises a control database and the control database is configured to provide preprogrammed control values to the control unit (50), in particular depending on detected voltages and currents.

6. Continuous cable winch according to any one of the preceding claims, wherein
- the control unit (50) is configured to change the rotational speed (ω₁) of the AC motor in response to the detected undervoltage and/or the detected overcurrent in such a way that the electrical power requirement of the AC motor (40) decreases at the same rate as the AC voltage (U_{R}, Us, U_{T}) supplied by the power grid (33) at the frequency converter (30).

7. Continuous cable winch according to any one of the preceding claims, wherein
- the control unit (50) is configured to halve and to double the electrical power requirement of the AC motor (40).

8. Continuous cable winch according to any of the preceding claims, wherein
- the frequency converter (30) is configured to be operated on a power grid (33) having a number of phases, preferably in a range from one phase to three phases.

9. Continuous cable winch according to any one of the preceding claims, wherein
- the frequency converter (30) and the control unit (50) are designed as an integrated device (90).

10. Continuous cable winch according to claim 6, wherein
- the power grid (33) has a nominal voltage of at least 50V, preferably at least 100V, more preferably at least 200V, and particularly preferably at least 230V.

11. Continuous cable winch according to any one of the preceding claims, wherein
- the AC motor (40) is configured to operate with a single-phase nominal AC voltage of 230 V.

12. Continuous cable winch according to any one of the preceding claims, wherein
- the frequency converter (30) is configured to operate on a three-phase power grid (33) with at least 400 V.

13. Continuous cable winch according to any one of the preceding claims, wherein
- the control voltage of the rectifier is 24 V, preferably 230 V.

14. Continuous cable winch according to any one of the preceding claims, wherein
- the continuous cable winch has an adapter (80) with a primary grid side and a secondary side for connection to the continuous cable winch (10), and
- the adapter is configured to provide at least a single-phase nominal AC voltage of 230 V on the secondary side.

## Revendications

1. Treuil à câble passant (10) comprenant une unité d'entraînement (20) et une unité de force (60) pour appliquer une force d'entraînement à un câble, la unité de force étant couplée à l'unité d'entraînement (20), l'unité d'entraînement (20) comprenant :
- un convertisseur de fréquence (30) avec un côté primaire (32) pour prélever du courant d'un réseau d'alimentation (33) et un côté secondaire (36) pour délivrer une tension alternative (Uu , Uv , U_{W} ),
- un moteur à courant alternatif (40) pour entraîner le treuil à câble passant (10) à vitesse de rotation variable (ω₁), ledit moteur étant alimenté par le convertisseur de fréquence (30) avec la tension alternative (Uu , Uv , U_{W} ), **caractérisé par**
- une unité de commande (50) qui est connectée au convertisseur de fréquence (30) et au moteur à courant alternatif (40) pour commander l'unité d'entraînement (20), l'unité de commande (50) étant reliée au moteur à courant alternatif (40) par l'intermédiaire d'un conducteur aller (E1) et d'un conducteur retour (E2),
- l'unité de commande (50) étant configurée pour modifier la vitesse de rotation (ω₁) du moteur à courant alternatif (40) à l'aide du convertisseur de fréquence (30).

2. Treuil à câble passant selon la revendication 1, dans lequel
- l'unité de commande (50) comporte des moyens de détection de tension (52) et est configurée pour modifier, en particulier pour réduire, la vitesse de rotation (ω₁) du moteur à courant alternatif lorsqu'une sous-tension est détectée.

3. Treuil à câble passant selon la revendication 1 ou 2, dans lequel
- l'unité de commande comporte des moyens de détection de courant (56) et est configurée pour modifier, en particulier pour réduire, la vitesse de rotation (ω₁) du moteur à courant alternatif lorsqu' une surintensité de courant est détectée.

4. Treuil à câble passant selon l'une des revendications précédentes, dans lequel
- l'unité de commande (50) est configurée pour modifier la vitesse de rotation (ω₁) du moteur à courant alternatif par paliers, de préférence à quatre paliers, et de manière particulièrement préférée à deux paliers (S₁ , S₂ ).

5. Treuil à câble passant selon l'une des revendications précédentes, dans lequel
- l'unité de commande (50) comporte une base de données de commande, et la base de données de commande est configurée pour fournir des valeurs de commande prépro-grammées à l'unité de commande (60), en particulier en fonction des tensions et des courants détectés.

6. Treuil à câble passant selon l'une des revendications précédentes, dans lequel
- l'unité de commande (50) est configurée pour modifier la vitesse de rotation (ω₁) du moteur à courant alternatif en fonction de la sous-tension détectée et/ou de la surintensité de courant détectée, de telle sorte que la puissance électrique requise par le moteur à courant alternatif (40) diminue dans la même mesure que la tension alternative (U_{R}, Us , U_{T} ) fournie par le réseau d'alimentation (33) au convertisseur de fréquence (30).

7. Treuil à câble passant selon l'une des revendications précédentes, dans lequel
- l'unité de commande (50) est configurée pour diviser par deux et pour doubler la puissance électrique requise par le moteur à courant alternatif (40).

8. Treuil à câble passant selon l'une des revendications précédentes, dans lequel
- le convertisseur de fréquence (30) est configuré pour fonctionner sur un réseau d'alimentation (33) comportant un certain nombre de phases, de préférence dans une région d'une à trois phases.

9. Treuil à câble passant selon l'une des revendications précédentes, dans lequel
- le convertisseur de fréquence (30) et l'unité de commande (50) sont conçus comme un dispositif intégré (90).

10. Treuil à câble passant selon la revendication 6, dans lequel
- le réseau d'alimentation (33) présente une tension nominale d'au moins 50 V, de préférence d'au moins 100 V, mieux encore d'au moins 200 V, et de manière particulièrement préférée d'au moins 230 V.

11. Treuil à câble passant selon l'une des revendications précédentes, dans lequel
- le moteur à courant alternatif (40) est configuré pour fonctionner avec une tension alternative nominale monophasée de 230 V.

12. Treuil à câble passant selon l'une des revendications précédentes, dans lequel
- le convertisseur de fréquence (30) est configuré pour fonctionner sur un réseau d'alimentation triphasé (33) d'au moins 400 V.

13. Treuil à câble passant selon l'une des revendications précédentes, dans lequel
- la tension de commande du redresseur est de 24 V, de préférence de 230 V.

14. Treuil à câble passant selon l'une des revendications précédentes, dans lequel
- le Treuil à câble passant comprend un adaptateur (80) avec un côté primaire côté réseau et un côté secondaire pour la connexion au Treuil à câble passant (10), et
- l'adaptateur est configuré pour fournir au moins une tension alternative nominale monophasée de 230 V sur le côté secondaire.
